# EUROPÄISCHE PATENTANMELDUNG

(11) **EP 0 580 045 A1**
(43) Veröffentlichungstag der Anmeldung: **26.01.1994**
(21) Anmeldenummer: 93111064.7
(22) Anmeldetag: 10.07.1993
(51) Int. Cl.: C08L 69/00, C08L 33/10, C08L 51/00

(54) **Verträgliche Polymermischungen aus Co-Polycarbonaten und Methacrylat-Copolymerisaten**

(30) Priorität: 21.07.1992 DE 4223983; 21.07.1992 DE 4243588
(71) Anmelder: Röhm GmbH, D-64293 Darmstadt (DE)
(72) Erfinder: May, Michael, Dr., D-64347 Griesheim (DE); Fischer, Jens-Dieter, Dr., D-64404 Bickenbach (DE)

(57) **Zusammenfassung**

Die Erfindung betrifft verträgliche Mischungen PL aus: Co-Polycarbonaten A) enthaltend:
a1) 95 bis 5 Gew.-% Bisphenol-A-Einheiten und
a2) 5 bis 95 Gew.-% Bisphenol-Einheiten gemäß Formel I: 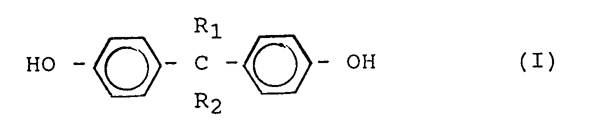 worin R₁ für Wasserstoff oder einen ggfs. verzweigten Alkylrest mit 1 bis 6 Kohlenstoffatomen und R₂ für einen ggfs verzweigten Alkylrest mit 1 bis 6 Kohlenstoffatomen, für einen ggfs. substituierten Cycloalkylrest mit 5 bis 16 Kohlenstoffatomen, für Phenyl, Benzyl und/oder 2-Phenylethyl, sowie R₁ und R₂ gemeinsam für einen ggfs. substituierten Cycloalkylidenrest mit 4 bis 16 Kohlenstoffatomen stehen können
und Methacrylat-Copolymerisaten B) aufgebaut aus:
b1) 99 bis 1 Gew.-% Methylmethacrylat-Einheiten und ggfs. weiteren, von b2 verschiedenen, α,β-ungesättigten Monomereinheiten in Mengen von 0 bis 40 Gew.-% und
b2) 1 bis 99 Gew.-% Acryl- und/oder Methacrylester-Einheiten der Formel II mit carbocyclischen Gruppen im Esterrest: 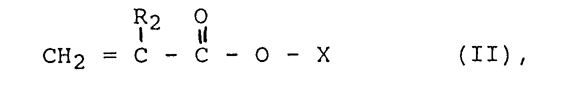 worin R₃ für Wasserstoff oder Methyl und X für Y oder Q-Y steht, wobei Y für einen ggfs. substituierten Cycloalkylrest mit 5 bis 12 Kohlenstoffatomen oder für einen ggfs. alkyl- bzw. oxyalkylsubstituierten Arylrest mit 6 bis 12 Kohlenstoffatomen und Q für eine Alkylengruppe mit 1 bis 6 Kohlenstoffatomen, die auch verzweigt sein kann, oder für eine Oxialkylengruppe mit 2 bis 6 Kohlenstoffatomen stehen kann,
sowie Anwendungen dieser verträglichen Mischungen.

## Beschreibung

### Gebiet der Erfindung

Die Erfindung betrifft verträgliche Polymermischungen, die sich durch eine hohe Transparenz auszeichnen, aus Co-Polycarbonaten A) und Methacrylat-Copolymerisaten B) und ihre Anwendungen.

### Stand der Technik

Polymermischungen, die ein aromatisches Polycarbonat enthalten, sind bekannt.
Nach DE-OS 23 29 585 werden durch Abmischen der thermoplastischen Kunststoffe Polystyrol und aromatisches Polycarbonat, enthaltend 2,2-Bis-(3,5-dimethyl-4-hydroxyphenyl)-propan-Einheiten, verträgliche und transparente Formmassen erhalten. Im Gegensatz hierzu sind Mischungen aus 2,2-Bis-(4-hydroxyphenyl)-propan-Polycarbonat (Bisphenol-A-Polycarbonat) und Polystyrol unverträglich.
JP 72 16 063 beschreibt Mischungen aus Polymethylmethacrylat, einem glasklaren, transparenten Kunststoff und Bisphenol-A-Polycarbonat, einem ebenfalls transparenten Kunststoff, als Mischungen mit perlartigem Glanz, ein deutliches Indiz dafür, daß auch hier keine homogenen, transparenten Polymermischungen vorliegen.

Eine verbesserte Polycarbonat-Formmasse wird nach DE-A 22 64 268 (= FR-A 2 167 650) erhalten, wenn dem Polycarbonat ein Methacrylat-Copolymerisat, bestehend aus 90 bis 75 Gew.-% Methylmethacrylat und 10 bis 25 Gew.-% eines Alkyl(meth)acrylats der Formel 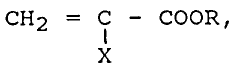
worin X für Wasserstoff oder Methyl und R für einen organischen Rest mit 4 bis 12 Kohlenstoffatomen steht, zugesetzt wird. Durch den Zusatz von 0,01 bis etwa 50 Gew.-% Copolymerisat wird die Schmelzviskosität des Polycarbonats ohne Beeinträchtigung der Transparenz mit steigendem Copolymerisat-Zusatz laufend verringert. Bei diesen Copolymerisaten handelt es sich somit um polymere Weichmacher, deren mittlere Molekulargewichte M_{w}, wie sie beispielsweise mit Hilfe der Gelpermeationschromatographie oder der Streulichtmethode bestimmbar sind (vgl. hierzu beispielsweise H.F. Mark et al. Encyclopedia of Polymer Science and Technology, Vol. 10, Seiten 1 bis 19, J. Wiley, 1987), zur Erzielung der beschriebenen Verträglichkeit aufgrund eigener Versuche mit entsprechenden Copolymerisaten bei M_{w} ≦ 15 000 Dalton liegen müssen. Zur Herstellung von Polymerlegierungen, die auch im Bereich hoher Polymethacrylat-Anteile technisch interessante Eigenschaften haben, sind o.g. Copolymerisate wegen des bekannten Abfalls der mechanischen Eigenschaftens im Molekulargewichtsbereich M_{w} < 5 x 10⁴ Dalton, insbesondere M_{w} < 3 x 10⁴ Dalton, jedoch völlig ungeeignet (vgl. hierzu beispielsweise Kunststoff-Handbuch, Bd. IX, Seiten 112 ff, Vieweg/Esser). Thermoplastische Formmassen als Polymermischungen, bestehend aus Polycarbonat, einem Copolymerisat aus Methylmethacrylat, Styrol und N-Phenylmaleinimid sowie einem mit Methylmethacrylat gepfropften Kautschuk sind nach EP-A 173 146 nicht verträglich.
Ebenso sind die aus EP-A 144 231 bekannten Polymermischungen, bestehend aus einem Polycarbonat und einem Copolymerisat aus Methylmethacrylat und N-Phenylmaleinimid und/oder einem mit Methylmethacrylat und N-Phenylmaleinimid gepfropftem EPDM-Kautschuk, nicht voll verträglich und damit nicht transparent.
EP 262 502 (= US 4 749 745) beschreibt thermoplastisch verarbeitbare Methylmethacrylat-Copolymerisate mit Methacrylamiden als Comonomere, die am Amidstickstoff mit einem cyclischen Rest substituiert sind und die kein ausgeprägtes UV-Absorptionsvermögen besitzen. Diese Copolymerisate bilden mit Polycarbonaten, insbesondere mit Bisphenol-A-Polycarbonaten, transparente, thermoplastisch verarbeitbare Polymermischungen.
In EP-A 283 975 (= US 4 950 716) sind transparente, thermoplastisch verarbeitbare Polymermischungen aus Bisphenol-A-Polycarbonat und Methacrylat-Copolymerisaten, aufgebaut aus Methylmethacrylat und N-Cyclohexylmaleinimideinheiten, beschrieben. Zum Aufbau des Methylmethacrylat-Copolymerisats können wahlweise noch weitere Monomere in Mengen von 0 bis 40 Gew.-% bezogen auf die Monomeren mitverwendet werden. Vorteilhaft können o.g. Polymermischungen infolge ihrer geringen optischen Doppelbrechung und geringen Wasseraufnahme für optische Bauteile eingesetzt werden.
EP-A 297 285 (= US 4 906 696) betrifft transparente, thermoplastisch verarbeitbare Polymermischungen aus Bisphenol-A-Polycarbonaten und Methacrylat-Copolymerisaten, die aus 95 bis 5 Gew.-% Methylmethacrylat und 5 bis 95 Gew.-% aus Acryl- und/oder Methacrylsäureestern mit carbocyclischen Gruppen im Esterrest hergestellt sind und die noch weitere α,β-ungesättigte Monomere als Polymerbausteine in Mengen von 0 bis 40 Gew.-%, enthalten können.
EP-A 321 878 (= US 4 906 699) und EP-A 326 938 (= US 4 997 883) beschreiben Schlagzähmodifizierungsmittel für Bisphenol-A-Polycarbonat, die Mischpolymerisate sind, bestehend aus einem Elastomeranteil und einem Methylmethacrylat-Copolymerisat-Anteil, die kovalent miteinander verbunden sind, wobei das Methylmethacrylat-Copolymerisat für sich ein solches ist, das mit Bisphenol-A-Polycarbonat verträglich ist.

### Aufgabe und Lösung

Mischungen von Polymerisaten sind in der Regel unverträglich. Trotz einer wachsenden Zahl von Gegenbeispielen, die in den letzten Jahren aufgefunden wurden, werden die Erfahrungen des Fachmanns auch heute noch von folgendem Satz bestimmt: "Miscibility is the exception, immiscibility is the rule" (siehe hierzu: Kirk-Othmer, Encyclopedia of Chemical Technology, 3rd. Ed., Vol. 18, Seite 460, J. Wiley, 1982).
In letzter Zeit hat sich das Interesse an verträglichen Polymermischungen verstärkt, die in der Regel den Vorteil der thermoplastischen Verarbeitbarkeit mit dem der Wiederverwertbarkeit und dem der Transparenz vereinen. Verbunden mit o.g. Vorteilen sind in der Regel reproduzierbar einstellbare, im allgemeinen durchaus befriedigende mechanische Eigenschaften.

Vom Bisphenol-A-Polycarbonat sind durch teilweisen Ersatz der Bisphenol-A-Gruppe, beispielsweise durch Cyclohexyliden- oder Cyclododecyliden-Bisphenol, sogenannte Co-Polycarbonate A) ableitbar, die deutlich höhere Wärmeformbeständigkeiten als Bisphenol-A-Polycarbonat aufweisen. Demgegenüber stehen allerdings eine relativ hohe Unbeständigkeit gegenüber Witterungseinflüssen (wie auch beim Bisphenol-A-Polycarbonat), ein gegenüber Bisphenol-A-Polycarbonat deutlicher Abfall der Zähigkeit und eine hohe Schmelzviskosität, die hohe Verarbeitungstemperaturen und damit eine thermooxidative Belastung der Komponente A) bedingt.
Bei der Suche nach verträglichen Polymerlegierungen PM bestehend aus Co-Polycarbonaten A) und Methacrylat-Copolymerisaten B) [und dies gilt nicht nur für Mischungen aus A) und B)] kann der Fachmann im allgemeinen keine Analogieschlüsse zum Bisphenol-A-Polycarbonat (oder allgemein: anderen Mischungskomponenten) treffen. Beispielsweise können geringste Veränderungen der Copolymerisat-Zusammensetzungen bei verträglichen Mischungen aus zwei Copolymerisaten zur Unverträglichkeit führen [vgl. hierzu beispielsweise J. Pfennig, H. Keskkula, J. Barlow and D. Paul, Makromolecules 18, Seiten 1937 ff (1985); H.W. Kammer et al. Acta Polymerica 40(2), Seiten 75 ff (1989)].
Es wurde nun gefunden, daß überraschenderweise bestimmte Mischungen aus Co-Polycarbonaten A) und Methacrylat-Copolymerisaten B) verträgliche transparente Polymerlegierungen PM bilden. Diese Polymerlegierungen sind aufgebaut aus dem Co-Polycarbonat A) enthaltend:
a1) 95 bis 5 Gew.-% Bisphenol-A-Einheiten und
a2) 5 bis 95 Gew.-% Bisphenol-Einheiten der Formel I: 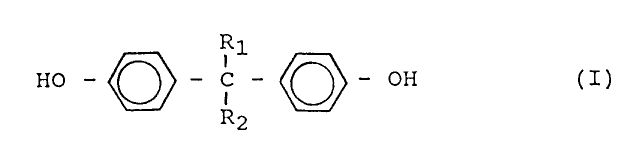 worin R₁ für Wasserstoff oder einen gegebenenfalls verzweigten Alkylrest mit 1 bis 6 Kohlenstoffatomen und R₂ für einen gegebenenfalls verzweigten Alkylrest mit 1 bis 6 Kohlenstoffatomen, für einen gegebenenfalls substituierten Cycloalkylrest mit 5 bis 16 Kohlenstoffatomen, für Phenyl, Benzyl und/oder 2-Phenylethyl, sowie R₁ und R₂ gemeinsam für einen ggfs. substituierten Cycloalkylidenrest mit 4 bis 16 Kohlenstoffatomen stehen können
und dem Methacrylat-Copolymerisat B) bestehend aus:
b1) 99 bis 1 Gew.-% Methylmethacrylat-Einheiten und gegebenenfalls weiteren von b2) verschiedenen α,β-ungesättigten Monomereinheiten in Mengen von 0 bis 40 Gew.-% und
b2) 1 bis 99 Gew.-% Acryl- und/oder Methacrylestereinheiten der Formel II mit carbocyclischen Gruppen im Esterrest: 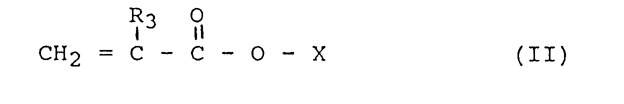 worin R₃ für Wasserstoff oder Methyl und X für Y oder Q-Y steht, wobei Y für einen gegebenenfalls substituierten Cycloalkylrest mit 5 bis 12 Kohlenstoffatomen oder für einen gegebenenfalls alkyl- bzw. oxyalkylsubstituierten Arylrest mit 6 bis 12 Kohlenstoffatomen, und Q für eine Alkylengruppe mit 1 bis 6 Kohlenstoffatomen, die auch verzweigt sein kann, oder für eine Oxialkylengruppe mit 2 bis 6 Kohlenstoffatomen stehen können,

und daß das Methacrylat-Copolymerisat B) ein Molekulargewicht M_{w} von mindestens 3 x 10⁴ Dalton besitzt.
Die Anteile der Monomergruppen a1) und a2) einerseits und b1) und b2) andererseits ergänzen sich jeweils zu 100 Gew.-%.
Eine weitere vorteilhafte Ausgestaltung der Erfindung sind Mischungen PL aus dem Co-Polycarbonat A) und einem zweiphasigen Schlagzähmodifizierungsmittel C), bestehend aus einer Elastomerphase mit einer Glasübergangstemperatur Tg < 10 Grad C und einer mit dieser wenigstens teilweise verknüpften Hartphase aus Copolymerisat B), die eine überraschend hohe Zähigkeit aufweisen.

### Die Co-Polycarbonate A)

Die Co-Polycarbonate A) bestehen aus Bisphenol-A-Einheiten und Bisphenol-Einheiten gemäß Anspruch 1, wie beispielsweise 1,1-Bis-(4-hydroxyphenyl)cyclopentan, 1,1-Bis-(4-hydroxyphenyl)cyclohexan, 1,1-Bis-(4-hydroxyphenyl)-3,3,5-trimethylcyclohexan, 1,1-Bis-(4-hydroxyphenyl)cyclooctan, 1,1-Bis-(4-hydroxyphenyl)cyclododecan, 2,2-Bis-(4-hydroxyphenyl)-1-phenyl-ethan, 1,1-Bis-(4-hydroxyphenyl)-1-phenyl-methan, 3,3-Bis-(4-hydroxyphenyl)-2,4-dimethylpentan oder 4,4-Bis-(4-hydroxyphenyl)-heptan, 1,1-Bis(4-hydroxyphenyl)-cyclododecan und 1,1-Bis(3,5-dimethyl-4-hydroxyphenyl)cyclododecan (vgl. hierzu auch Kirk-Othmer, Encyclopedia of Chemical Technology, 3rd. Ed. Vol. 18, Seiten 479 bis 494, Vol. 6, Seiten 106 bis 116, J. Wiley, 1982). O.g. Bisphenole besitzen als Homo-Polycarbonate, d.h. nach Umsetzung mit Phosgen, teilweise deutlich höhere Glasübergangstemperaturen Tg als Bisphenol-A-Polycarbonat und damit auch höhere Wärmeformbeständigkeiten. Dementsprechend steigen die Glasübergangstemperaturen Tg von Co-Polycarbonaten A), enthaltend Bisphenol-A-Einheiten und o.g. Bisphenole, mit steigendem Anteil an o.g. Bisphenolen an. Beispielsweise weist das Homo-Polycarbonat mit 1,1-Bis-(4-hydroxyphenyl),3,3,5-Trimethylcyclohexan-Einheiten eine Tg = 239 Grad C auf,
gegenüber Bisphenol-A-Polycarbonat mit einer Tg = 148 Grad C. Im Handel erhältliche Co-Polycarbonate (z.B. APEC-HT ®-Typen, Bayer), bestehend aus vorgenannten Einheiten, besitzen Glasübergangstemperaturen von bis zu etwa 190 Grad C.
Die mittleren Molekulargewichte M_{w} der Co-Polycarbonate (zur Bestimmung von M_{w} s.o.) liegen im Bereich von 2 x 10⁴ bis 6 x 10⁴ Dalton und die Vicat-Erweichungstemperaturen, gemessen nach DIN 53 460, entsprechen etwa den Glasübergangstemperaturen.

### Die Polymethacrylat-Copolymerisate B)

Die Herstellung der Copolymerisate B) wird nach bekannten Verfahren zur Polymerisation α,β-ungesättigter Verbindungen, insbesondere durch radikalische Polymerisation, beispielsweise in Substanz, in Lösung oder als Suspensionspolymerisation durchgeführt: Als Polymerisationsinitiatoren können dazu Azoverbindungen, wie Azodiisobutyronitril, Peroxide, wie Dibenzoylperoxid oder Dilauroylperoxid, oder Redoxsysteme dienen, oder die Startradikale können strahlenchemisch erzeugt werden (vgl. hierzu beispielsweise H. Rauch-Puntigam, Th. Völker "Acryl- und Methacrylverbindungen", Springer-Verlag, Heidelberg, 1967; Kirk-Othmer, Encyclopedia of Chemical Technology, Vol. 1, Seiten 386 ff, J. Wiley & Sons, 1978).

Die erfindungsgemäßen Copolymerisate B) enthalten vorzugsweise 5 bis 95 Gew.-% Methylmethacrylat-Einheiten, besonders bevorzugt 20 bis 90 Gew.-% , ganz besonders bevorzugt 50 bis 80 Gew.-%, und entsprechend ganz besonders bevorzugt 20 bis 50 Gew.-% mit dem Methylmethacrylat copolymerisierte Acrylat- und/oder Methacrylat-Einheiten der o.g. Formel I. Das Copolymerisat B) kann in Mengen von 0 bis 40 Gew.-%, insbesondere in Mengen von 1 bis 25 Gew.-% weitere α,β-ungesättigte Monomereinheiten enthalten, wie beispielsweise Styrol, α-Methylstyrol, Acrylsäure, Methacrylsäure und/oder C2- bis C10-Alkylester der Acryl- oder Methacrylsäure, wobei die Alkylgruppen gegebenenfalls verzweigt sein können.
Die Verträglichkeit von Polymeren hängt von ihrem Molekulargewicht ab, und zwar nimmt die Verträglichkeit von Polymeren in der Regel mit steigendem Molekulargewicht ab. Die erfindungsgemäßen Copolymerisate B) weisen mittlere Molekulargewichte M_{w}, wie sie beispielsweise mit Hilfe der Lichtstreuung oder Gelpermeationschromatographie bestimmbar sind (s.o.), von über 3 x 10⁴ bis etwa 3 x 10⁵ Dalton, vorzugsweise 5 x 10⁴ bis 1,5 x 10⁵ Dalton auf. Dies entspricht reduzierten Viskositäten n_{spez}/C, gemessen nach DIN 51 562 in Chloroform als Lösungsmittel, von etwa 18 bis 110 cm³g⁻¹, vorzugsweise 30 bis 75 cm³g⁻¹. Die Einstellung der Molekulargewichte erfolgt durch Polymerisation in Gegenwart von Molekulargewichtsreglern, wie insbesondere von den dazu bekannten Mercaptanen (vgl. hierzu beispielsweise Houben-Weyl, Methoden der organischen Chemie, Band XIV/1, Seite 66, 1961; Kirk-Othmer, Encyclopedia of Chemical Technology, Vol. 1, Seite 296, John Wiley & Sons, 1978).
Als Monomere der Formel I können beispielsweise eingesetzt werden: Cyclopentyl(meth)acrylat, Cyclohexyl(meth)acrylat, Cyclooctyl(meth)acrylat, 3,3,5-Trimethylcyclohexyl(meth)acrylat, 2-Cyclohexylethyl(meth)acrylat, 3-Cyclohexylpropyl(meth)acrylat, 4-t-Butylcyclohexyl(meth)acrylat, Phenyl(meth)acrylat und dessen Alkyl-, Alkoxy- und Alkylamin-substituierten Derivate mit 1 bis 6 Kohlenstoffatomen im Alkylrest, wie insbesondere das p-Methoxyphenyl(meth)acrylat, die N,N-Dialkylaminosubstituierten Phenyl(meth)acrylate oder Alkyl(oxy)phenyl(meth)acrylate, wie 2-Phenoxyethyl(meth)acrylat, Benzyl(meth)acrylat, 1-Phenylethyl(meth)acrylat, 2-Phenylethyl(meth)acrylat, 3-Phenylpropyl(meth)acrylat, 2-Naphthyl(meth)acrylat.
Die erfindungsgemäßen Copolymerisate B) lassen sich thermoplastisch zu glasklaren, farblosen Formkörpern verarbeiten, die Vicat-Erweichungstemperaturen nach DIN 53 460 von etwa 100 bis 130 Grad C aufweisen.

### Die Schlagzähmodifizierungsmittel C)

Die erfindungsgemäßen Schlagzähmodifizierungsmittel C) für die Co-Polycarbonate A) sind Polymerisate bestehend aus mindestens zwei Phasen, einer Zähphase c1) und einer wenigstens teilweise mit c1) kovalent verknüpften Hartphase c2).

Definitionsgemäß handelt es sich bei der Zähphase c1) um Polymerisate mit einer Glasübergangstemperatur Tg < 10 Grad C, bevorzugt < -10 Grad C (zur Bestimmung von Tg vgl. beispielsweise A.Turi, "Thermal Characterization of Polymeric Materials", Seiten 169 ff, Academic Press, New York, 1981). Vorzugsweise sind die Polymerisate c1) ausgewählt aus der Gruppe bestehend aus Polyolefinen, Polydienen, Polysiloxanen und Polyacrylaten.
Bei den Polyolefinen handelt es sich vorzugsweise um Homo- bzw. Copolymerisate des Ethylens, Propylens und Isobutylens (vgl. hierzu Ullmanns Encyklopädie der Technischen Chemie, 4. Auflage, Bd. 19, Seiten 167 bis 226, Verlag Chemie, 1980). Im allgemeinen liegt das mittlere Molekulargewicht M_{w} der Polyolefine im Bereich zwischen 10⁴ und 10⁶ Dalton. Von besonderem Interesse sind Ethylen-Propylen-Dien-Polymere (EPDM: vgl. Ullmann loc.cit., Bd. 12, Seiten 619 bis 621; Kirk-Othmer, Encyclopedia of Chemical Technology, 3rd. Ed., Vol. 8, Seiten 492 bis 500, J. Wiley, 1979). Als Dien-Komponente wird vorzugsweise Dicyclopentadien, Ethylidennorbornen oder trans-Hexadien-1,4 eingesetzt. Die Molekulargewichte M_{w} der großtechnisch erzeugten EPDM-Polymerisate liegen im allgemeinen im Bereich zwischen 5 x 10⁴ und 5 x 10⁵ Dalton. Die dynamischen Einfriertemperaturen werden mit -45 bis -30 Grad C (Sequenztypen) angegeben, wobei die Terpolymerisate für Ethylengehalte von bis zu 60 Gew.-% völlig amorph sind. Neben EPDM-Polymerisaten können auch EPTM-Polymerisate (Ethylen-Propylen-Trien) eingesetzt werden.
Als Polydiene werden insbesondere die einschlägig bekannten Kautschuk-Typen wie Polybutadien, Poly-2-chlorbutadien oder Polyisopren eingesetzt (vgl. Ullmann, loc.cit., 4. Aufl. Bd. 12, Seiten 595 bis 635). Das Molekulargewicht M_{w} liegt in der Regel zwischen 10⁴ und 10⁶ Dalton.
Weiter seien als Zähphase c1) Polysiloxane (MQ, MPQ, MPVQ nach ISO 1629, 1. Ausg. 1976) genannt. Üblicherweise besitzen die gebräuchlichen Silikonkautschuke eine durch spezielle Substituenten modifizierte Polydimethylsiloxan-Kette (vgl. Ullmann, loc.cit., Bd. 13, Seiten 628 bis 663). Die bei Raumtemperatur vernetzenden Typen sind endständig mit funktionellen Gruppen versehene Polysiloxane mit Molekulargewichten M_{w} zwischen 10⁴ und 10⁵ Dalton. Die heißvulkanisierenden Typen, meist auf Basis Polydimethylsiloxan (MQ) lassen sich mit schnell zerfallenden Diacylperoxiden bei erhöhter Temperatur, beispielsweise bei 150 Grad C, vernetzen.
Vorzugsweise werden für c1) Polyacrylate verwandt, deren Monomerbausteine eine Glasübergangstemperatur Tg des resultierenden Homo- bzw. Copolymerisats von < 10 Grad C, vorzugsweise < -10 Grad C gewährleisten. Die Glastemperatur der Homo- bzw. Copolymerisate ist bekannt bzw. läßt sich in bekannter Weise vorherbestimmen (vgl. hierzu beispielsweise J. Brandrup, E.H. Immergut, Polymer Handbook, III, Seiten 144 bis 148, J. Wiley, 1975). Vorzugsweise werden die Polyacrylate durch Polymerisation in wäßriger Emulsion, teilweise auch in Suspension, hergestellt. Besonders bevorzugt bei Polyacrylaten als Zähphase c1) ist die Herstellung durch Emulsionspolymerisation , da auf diesem Weg besonders einfach Materialien mit einem definierten Teilchenaufbau erzeugt werden können. Besonders bevorzugt sind hierbei Latex-Teilchen mit einer äußeren Hülle c2), bestehend aus dem Copolymerisat B) gemäß Anspruch 1, die im Inneren einen Gummi aus vernetztem Polyacrylat c1) enthalten. Ganz besonders bevorzugt sind Latex-Teilchen mit einem wenigstens dreistufigen Aufbau, also solche Teilchen, die im Polyacrylat c1) noch einen harten Polymerkern aufweisen. Insgesamt sollen diese Polyacrylat-Teilchen, die das Schlagzähmodifizierungsmittel C) ausmachen, einen Durchmesser von 0,1 bis 3 µm, bevorzugt 0,15 bis 1 µm (mit eingelagertem harten Kern) aufweisen. Prinzipiell ist der Aufbau solcher Latexteilchen und die Isolierung des Polymerisat-Feststoffs in DE-A 33 00 256 (= US 4 513 118) beschrieben.
Zweckmäßig arbeitet man bei der Emulsionspolymerisation im neutralen bzw. leicht sauren pH-Bereich, wobei die Verwendung langkettiger Alkylsulfate bzw. Alkylsulfonate günstig ist. Als Initiatoren dienen zweckmäßig die einschlägig bekannten Azoverbindungen und organische oder anorganische Peroxide, wie beispielsweise Persulfat/Bisulfit. Im allgemeinen liegt der Gehalt an Initiator im Bereich zwischen 10⁻³ und 1 Gew.-% bezogen auf die Monomeren. Als Acrylmonomere seien besonders genannt Ethylacrylat, Butylacrylat, 2-Ethylhexylacrylat sowie Alkoxylacrylate (vgl. US 3 488 321). In der Regel enthalten diese Acrylatelastomeren c1) noch vernetzende Monomere, wie beispielsweise Allylmethacrylat oder Ethylenglykoldimethacrylat, in Anteilen von 0,1 bis 5 Gew.-%. Besonders genannt seien Ethylacrylat und Butylacrylat als Hauptbestandteile.
Die Hartphase c2), die aus Copolymerisaten B) gemäß Anspruch 1 besteht, ist mit der Zähphase c1) wenigstens teilweise kovalent, d.h. zu mehr als 5 Gew.-% bezogen auf c2), verknüpft. Um die Verknüpfung effektiv zu gestalten, werden in die Zähphase c1) bevorzugt bekannte vernetzende Monomere mit mindestens zwei radikalisch aktivierbaren C=C-Doppelbindungen im Molekül, wie beispielsweise Di- oder Tri(meth)acrylate, eingebaut. Besonders bevorzugt sind sogenannte Pfropfvernetzer, wie Allyl(meth)acrylat oder Triallylcyanurat. Sie kommen vorzugsweise in Mengen von 0,1 bis 5 Gew.-% bezogen auf c1) zur Anwendung.
Die Herstellung des Schlagzähmodifizierungsmittels C) kann in Anlehnung an bekannte Verfahren wie folgt vorgenommen werden. Im allgemeinen gibt man das Polymerisat c1), beispielsweise ausgewählt aus der Gruppe Polyolefine, Polydiene oder Polysiloxane, vor, vorzugsweise in Form einer Lösung in einem zur weiteren Verarbeitung geeigneten Lösungsmittel, beispielsweise in einem für die radikalische Polymerisation der Monomeren c2) bzw. B) geeigneten Lösungsmittel (vgl. H. Rauch-Puntigam, Th. Völker, Acryl- und Methacrylverbindungen, Springer, 1967; J. Brandrup, E.H. Immergut, Polymer Handbook, loc.cit.). Dabei ist u.a. die Tendenz des Lösungsmittels zu Übertragungsreaktionen zu berücksichtigen. Genannt seien beispielsweise Ester wie Butylacetat oder Ethylacetat, Kohlenwasserstoffe wie Toluol oder Ketone wie Aceton. Man geht im allgemeinen von Lösungen mit einem Gehalt von 10 bis 60 Gew.-% des Polymerisats c1) aus, denen die Monomeren gemäß c2) und Polymerisationshilfsmittel beispielsweise durch Eintropfen zugesetzt werden. Die Polymerisation wird in der Regel bei erhöhter Temperatur beispielsweise im Bereich zwischen 80 bis 140 Grad C durchgeführt. Als Initiatoren können die an sich üblichen wie Peroxide oder Azoverbindungen verwendet werden (vgl. hierzu H. Rauch-Puntigam, Th. Völker, Acryl- und Methacrylverbindungen, loc.cit.). Bei tiefer siedenden Lösungsmitteln ist z.B. Dibenzoylperoxid anwendbar, während bei höher siedenen Lösungsmitteln z.B. tert.-Butyl-Verbindungen wie tert.-Butylperoctoat zweckmäßig Anwendung finden können. Als Lösungsmittel können aber auch die das Polymerisat c2) aufbauenden Monomeren selbst dienen.
Vorteilhafterweise gewinnt man das Schlagzähmodifizierungsmittel C) durch Ausfällen aus der Lösung, beispielsweise mit Methanol als Fällungsmittel, oder durch Entgasen auf dem Extruder. Speziell im Fall von Latex-Dispersionen kann die Gewinnung von C) durch Fällung, Sprühtrocknung, Gefrierkoagulation oder durch Abquetschen auf dem Extruder gewonnen werden.

### Charakterisierung und Herstellung der erfindungsgemäßen Polymermischungen PM und PL

Die Charakterisierung der erfindungsgemäßen Polymermischungen PM als verträgliche Mischungen erfolgt nach den anerkannten Kriterien (vgl. hierzu Kirk-Othmer, loc.cit., Vol. 18, Seiten 457 bis 460; Brandrup, Immergut, Polymer Handbook, 2nd. Ed., III-Seite 211, Wiley Interscience, 1975).

Bei den verträglichen Polymermischungen (= Polymerlegierungen) PM beobachtet man einen Brechungsindex und eine einzige Glasübergangstemperatur, die zwischen denen der beiden Polymerisat-Komponenten A) und B) liegt. Als weiterer Hinweis auf die Verträglichkeit von Polymermischungen wird das Auftreten der LCST (Lower Critical Solution Temperature) herangezogen, deren Existenz auf dem Vorgang beruht, daß sich beim Erwärmen die bis dahin klare transparente Mischung in verschiedene Phasen auftrennt und optisch trübe wird. Dieses Verfahren stellt einen eindeutigen Beweis dafür dar, daß die ursprüngliche Polymermischung aus einer einzigen, im thermodynamischen Gleichgewicht befindlichen, homogenen Phase bestand (vgl. z.B. D.R. Paul, Polymer Blend & Mixtures, Seiten 1 bis 3, Martinus Nijhoff Publishers, Dosdrecht, Boston 1985). Experimentell wird dazu der Trübungspunkt T_{Tr} (Trübungstemperatur) bestimmt, beispielsweise auf einer Kofler-Heizbank (vgl. Chem. Ing.-Technik, Seiten 289, 1950).
Die Mischungen PM und PL können durch unterschiedliche Mischverfahren hergestellt werden, wie beispielsweise durch intensives mechanisches Vermischen der Komponenten in der Schmelze oder im Extruder. Die Polymermischungen PM können auch aus einem gemeinsamen Lösungsmittel als sogenannte "solution cast polyblends" hergestellt werden (vgl. hierzu Kirk-Othmer, Encyclopedia of Chemical Technology, 3rd. Ed., Vol. 18, Seiten 443 bis 478, J. Wiley, 1982): In einem weiteren Verfahren kann zur Herstellung der Polymermischungen PM Co-Polycarbonat A) in der Monomerenmischung des anderen Copolymerisats B) aufgelöst werden, wobei B) in Gegenwart von A) durch Polymerisation hergestellt wird. Der Mischungsart sind keine Grenzen gesetzt.

Zunächst erzeugt man mechanische Mischungen der Mischungskomponenten, wobei vorteilhaft von Feststoffen wie beispielsweise Granulaten oder Perlpolymerisaten ausgegangen wird, unter Verwendung langsam laufender Aggregate, wie z.B. Trommel-, Rhönrad-, Doppelkammer- oder Pflugscharmischern. Die langsam laufenden Mischaggregate verursachen ein mechanisches Mischen, ohne daß die Phasengrenzen aufgehoben werden (vgl. Ullmanns Encyclopädie der Technischen Chemie, 4. Aufl., Bd. 2, Seiten 282 bis 311, Verlag Chemie). Die thermoplastische Aufbereitung erfolgt anschließend durch homogenes Mischen in der Schmelze unter Verwendung von heizbaren Mischaggregaten bei den dafür geeigneten Temperaturen, wie z.B. in Knetern bei 150 bis 300 Grad C oder vorzugsweise in Extrudern , wie beispielsweise Ein- oder Mehrschneckenextrudern bzw. ggfs. in Extrudern mit oszillierender Schnecke und Scherstiften (z.B. im Bussco-Kneter).

### Vorteilhafte Wirkungen der Erfindung

Die erfindungsgemäßen Polymerlegierungen PM gemäß Anspruch 1 können bereits aufgrund ihrer Verträglichkeit das Interesse der Technik beanspruchen. Die Polymermischungen PM sind gewöhnlich glasklar und transparent. Die geringe Fließfähigkeit der Co-Polycarbonate A) wird durch Zulegieren schon geringer Anteile an Copolymerisat B) deutlich erhöht, während die geringe Wärmeformbeständigkeit der Copolymerisate B) durch Zulegieren von A) erhöht wird.
Eine weitere interessante Anwendungsmöglichkeit wird durch die Erhöhung der Kerbschlagzähigkeit des Co-Polycarbonats A) durch Zumischen des Schlagzähmodifizierungsmittels C), das vorzugsweise aus einer Elastomerphase c1) und einer mit A) verträglichen Hartphase c2) besteht, eröffnet [c2) entspricht in der Zusammensetzung dem Copolymerisat B)].

Die nachfolgenden Beispiele dienen zur Erläuterung der Erfindung.
Folgende Eigenschaften wurden bestimmt:
1. LCST durch Messung des Trübungspunkts T_{Tr} auf der Kofler-Heizbank (s.o.)
2. VICAT-Erweichungstemperatur VET in Grad C nach DIN 53 460
3. Reduzierte Viskosität n_{spec}/C in Chloroform nach DIN 51 562
4. Mittleres Molekulargewicht M_{w} per Gelpermeationschromatographie (s.o.)
5. Glasübergangstemperatur Tg per Differentialthermoanalyse (DSC, s.o.)
6. Schlagzähigkeit (SZ) und Kerbschlagzähigkeit (KSZ) nach DIN 53 453 bzw. ISO/R 179

### BEISPIELE

### Beispiel 1

### Exemplarische Herstellung der Copolymerisate B

Dem Monomerengemisch aus Methylmethacrylat, Monomeren gemäß Formel I in Anspruch 1 und ggfs. weiteren Monomeren werden 0,2 Gew.-Teile, bezogen auf die Gesamtheit der Monomeren, Dilauroylperoxid als Polymerisationsinitiator und 0,55 Gew.-Teile Dodecylmercaptan als Molekulargewichtsregler zugegeben. Diese Lösung wird im Wasserbad in einem Folienschlauch 18 Stunden bei 50 Grad C und 22 Stunden bei 60 Grad C polymerisiert und zur Endpolymerisation im Trockenschrank 3 Stunden bei 110 Grad C getempert. Das mittlere Molekulargewicht M_{w} der so hergestellten Polymerisate liegt zwischen 6 x 10⁴ und 1,5 x 10⁵ Dalton, die spezifische Grenzviskosität η_{spez}/C im Bereich zwischen 40 bis 75 cm³g⁻¹.

### Beispiel 2

### Herstellung und Charakterisierung der Polymermischungen PM aus Co-Polycarbonat A) und Copolymerisat B)

Die gemäß Beispiel 1 hergestellten Copolymerisate B) werden mit dem Co-Polycarbonat APEC ® HT 9351 (Bayer), einem Co-Polycarbonat aus 65 Mol.-% Bisphenol-A- und 35 Mol.-%, 3,3,5-Trimethylcyclohexyliden-Bisphenol-Einheiten, in einem Trommelmischer in den angegebenen Mischungsverhältnissen gemischt und auf einem Einschneckenmischextruder als Band extrudiert. An Bandproben werden visuelle Prüfungen, Messungen der Glasübergangstemperatur Tg, Messungen der VICAT-Erweichungstemperatur, sowie auf einer Kofler-Heizbank die Trübungstemperatur T_{Tr} bestimmt:

| Copolymerisat B) | | Mischungsverhältnis A)/B) Gew.-% | Aussehen des Extrudats | Tg (^{o}C) | VET (^{o}C) | T_{Tr} (^{o}C) |
|---|---|---|---|---|---|---|
| 1. | Methylmethacrylat (MMA)/Phenylmethacrylat(PMA) = 90/10 | 90/10 | klar, farblos | 183 | -- | 260 |
| | η_{spec}/C = 46,6 | 70/30 | " | 148 | -- | 270 |
| | | 50/50 | " | 139 | 138 | 270 |
| | | 30/70 | " | 128 | -- | >270 |
| | | 10/90 | " | 121 | -- | >270 |
| 2. | MMA/PMA = 50/50 | 90/10 | klar, farblos | 174 | -- | >270 |
| | η_{spec}/C = 42,2 | 70/30 | " | 153 | -- | >270 |
| | | 50/50 | " | 139 | 137 | >270 |
| | | 30/70 | " | 130 | -- | >270 |
| | | 10/90 | " | 120 | -- | >270 |
| 3. | MMA/Cyclohexylmethacrylat (CHMA) = 80/20 | 90/10 | klar, farblos | 179 | -- | 265 |
| | η_{spec}/C = 42,9 | 70/30 | " | 152 | -- | 255 |
| | | 50/50 | " | 139 | 139 | 270 |
| | | 30/70 | " | 130 | -- | >270 |
| | | 10/90 | " | 121 | -- | >270 |

### Beispiel 3

### Herstellung des Schlagzähmodifizierungsmittels C) für Co-Polycarbonat A) mit Kern-Schale-Struktur

In einem Witt'schen Topf mit Heizung, Rührer und einem Volumen von 6 Liter werden 1170 g Wasser (dest.), 0,1 g Essigsäure (Konz.), 0,005 g Eisen-II-Sulfat und 25 g einer Monomeremulsion ME1, bestehend aus 1775 g dest. Wasser, 4 g C15-Paraffinsulfonat, 1656 g Butylacrylat und 33,8 g Allylmethacrylat, vorgelegt und bei 50 Grad C mit 18 g tert-Butylhydroperoxid und 2,5 g Natriumhydroxymethylsulfinat die Polymerisation gestartet. Nach Erreichen des Temperaturmaximums werden innerhalb von 2,5 Stunden weitere 3450 g der Monomeremulsion ME1 hinzugegeben und polymerisiert (Kernpolymerisat).

Nach dem Abklingen der Reaktion wird die erhaltene Dispersion auf 50 Grad C gehalten. Bei dieser Temperatur wird während 2 Stunden eine Monomeremulsion ME2, bestehend aus 960 g dest. Wasser, 2 g C15-Paraffinsulfonat, 455 g Methylmethacrylat, 455 g Phenylmethacrylat und 4,6 g Dodecylmercaptan, zudosiert und in Gegenwart von 0,9 g tert-Butylperoxid polymerisiert. Nach Zulaufende wird 30 min bei 50 Grad C nacherhitzt.
Das Schlagzähmodifizierungsmittel C) wird durch Gefrierkoagulation der resultierenden Polymerdispersion als pulverförmiges Material isoliert.

### Beispiel 4

### Herstellung und Charakterisierung der Polymermischung PL aus Co-Polycarbonat A) und Schlagzähmodifizierungsmittel C)

20 Gew.-% (entsprechend 13 Gew.-% Butylacrylat-Anteil) des in Beispiel 3 beschriebenen Modifizierungsmittels C) werden mit 80 Gew.-% Co-Polycarbonat A) APEC ® HT 9351 (Bayer) gemäß Beispiel 2 abgemischt und danach granuliert und spritzgegossen. Es resultiert eine glänzende, opake Polymermischung mit deutlich verbesserter Kerbschlagzähigkeit und sehr guter Wärmeformbeständigkeit: Eigenschaftsprofil der Mischung gemäß Beispiel 4

| | | Polymermischung PL | APEC ® HT 9351 |
|---|---|---|---|
| SZ | (KJm⁻²) bei 23 Grad C | o. Bruch | o. Bruch |
| KSZ | (KJm⁻²) bei 23 Grad C | 24,0 | 7,6 |
| | -20 Grad C | 21,9 | 8,5 |
| VET | (Grad C) | 166 | 185 |

## Patentansprüche

1. Verträgliche, transparente und thermoplastische Polymermischungen PM, bestehend aus einem Co-Polycarbonat A) und einem Methacrylat-Copolymerisat B),
dadurch gekennzeichnet,
daß das Co-Polycarbonat A) aufgebaut ist aus:
a1) 95 bis 5 Gew.-% Bisphenol-A-Einheiten und
a2) 5 bis 95 Gew.-% Bisphenol-Einheiten der Formel I 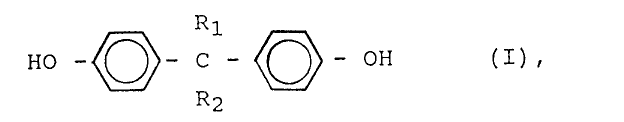 worin R₁ für Wasserstoff oder einen ggfs. verzweigten Alkylrest mit 1 bis 6 Kohlenstoffatomen und R₂ für einen ggfs. verzweigten Alkylrest mit 1 bis 6 Kohlenstoffatomen, für einen ggfs. substituierten Cycloalkylrest mit 5 bis 16 Kohlenstoffatomen, für Phenyl, Benzyl und/oder 2-Phenylethyl, sowie R₁ und R₂ gemeinsam für einen ggfs. substituierten Cycloalkylidenrest mit 4 bis 16 Kohlenstoffatomen stehen können
und
daß das Methacrylat-Copolymerisat B) aufgebaut ist aus:
b1) 99 bis 1 Gew.-% Methylmethacrylat-Einheiten und ggfs. weiteren, von b2) verschiedenen, α,β-ungesättigten Monomereinheiten in Mengen von 0 bis 40 Gew.-% und
b2) 1 bis 99 Gew.-% Acryl- und/oder Methacrylestereinheiten der Formel II mit carbocyclischen Gruppen im Esterrest: 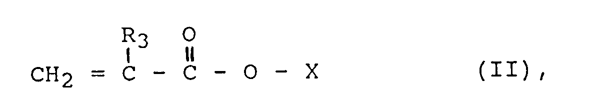 worin R₃ für Wasserstoff oder Methyl und X für Y oder Q-Y steht, wobei Y für einen ggfs. substituierten Cycloalkylrest mit 5 bis 12 Kohlenstoffatomen oder für einen ggfs. alkyl- bzw. oxyalkylsubstituierten Arylrest mit 6 bis 12 Kohlenstoffatomen, und Q für eine Alkylengruppe mit 1 bis 6 Kohlenstoffatomen, die auch verzweigt sein kann, oder für eine Oxialkylengruppe mit 2 bis 6 Kohlenstoffatomen stehen können,
und daß das Copolymerisat B) ein Molekulargewicht M_{w} von mindestens 3 x 10⁴ Dalton besitzt, sowie daß die Anteile der Monomergruppen a1) und a2) einerseits und b1) und b2) andererseits sich jeweils zu 100 Gew.-% ergänzen.

2. Polymermischungen PL, dadurch gekennzeichnet, daß sie aufgebaut sind aus:
5 bis 95 Gew.-% Co-Polycarbonat A) gemäß Anspruch 1,
95 bis 5 Gew.-% eines mindestens zweiphasigen Schlagzähmodifizierungsmittels C), bestehend aus:
c1) 20 bis 90 Gew.-Teilen mindestens einer ggfs. vernetzten Zähphase mit einer Glasübergangstemperatur Tg < 10 Grad C und
c2) 80 bis 10 Gew.-Teilen mindestens eines mit c1) wenigstens teilweise kovalent verknüpften, mit dem Co-Polycarbonat A) verträglichen Copolymerisats, das in der Zusammensetzung dem Methacrylat-Copolymerisat B) gemäß Anspruch 1 entspricht und
c3) gegebenenfalls weiteren 0 bis 50 Gew.-Teilen Methacrylat-Copolymerisat B) gemäß Anspruch 1.

3. Verwendung der Polymermischungen PM und PL gemäß den Ansprüchen 1 und 2 zur Herstellung von Formkörpern, Beschichtungen und faserverstärkten Laminaten.

4. Verwendung von Polymermischungen gemäß Anspruch 1, für die Herstellung von für optische Zwecke verwendbaren Formkörpern.
